Europäisches Patentamt

European Patent Office

Office européen des brevets

(19)

(11) Numéro de publication : **0 402 194 B1**

(12)

# FASCICULE DE BREVET EUROPEEN

(45) Date de publication du fascicule du brevet :
**03.08.94 Bulletin 94/31**

(51) Int. Cl.⁵ : **G01J 3/45,** G01J 3/453,
G01J 9/02

(21) Numéro de dépôt : **90401410.7**

(22) Date de dépôt : **28.05.90**

(54) **Dispositif interférométrique notamment pour spectro-imageur par transformée de fourier multiplex à défilement, et spectro-imageur le comportant.**

(30) Priorité : **06.06.89 FR 8907457**

(43) Date de publication de la demande :
**12.12.90 Bulletin 90/50**

(45) Mention de la délivrance du brevet :
**03.08.94 Bulletin 94/31**

(84) Etats contractants désignés :
**DE DK ES GB IT NL SE**

(56) Documents cités :
**EP-A- 0 068 922**
**US-A- 3 684 379**
**US-A- 4 523 846**
**PROCEEDINGS OF THE SPIE, vol. 810:**
**"Optical systems for space applications",**
**1987, pages 117-124; P. VERMANDE et al:**
**"Interferometric spectro-imager system**
**(ISIS)"**

(56) Documents cités :
**APPLIED OPTICS, vol. 24, no. 24, 15 décembre**
**1985, New York, US; "Fourier transform infra-**
**red spectrometer"**
**PATENT ABSTRACTS OF JAPAN, vol. 9, no. 83**
**(P-348)[1806], 12 avril 1985; & JP-A-59 212 727**

(73) Titulaire : **AEROSPATIALE Société Nationale**
**Industrielle**
**37, Boulevard de Montmorency**
**F-75781 Paris Cédex 16 (FR)**

(72) Inventeur : **Simeoni, Denis**
**1 rue Félix Faure**
**F-06400 Cannes (FR)**
Inventeur : **Cerutti-Maori, Guy**
**50 boulevard du Soleil**
**F-06150 Cannes (FR)**

(74) Mandataire : **Rinuy, Santarelli**
**14, avenue de la Grande Armée**
**F-75017 Paris (FR)**

## Description

L'invention concerne un dispositif interférométrique adapté à être intégré dans un système de formation d'image par spectrométrie par transformée de FOURIER Multiplex (on parle aussi de "spectro-imageur").

Un tel spectro-imageur est entraîné dans un mouvement de défilement parallèlement à une zone-objet à scruter, une zone de sol par exemple.

Le principe de cette spectro-imagerie par transformée de FOURIER Multiplex est connu en soi, notamment d'après le document EP-A-0 068 922 qui enseigne comment utiliser le défilement relatif de la surface terrestre par rapport à un avion ou à un satellite afin de réaliser par interférences lumineuses une analyse spectrale d'un ensemble de zones élémentaires de sol contigües. Cela évite tout déplacement relatif entre des pièces optiques du dispositif interférométrique. On utilise les contenus successifs d'un réseau ou mosaïque de détecteurs CCD sur lequel se forment les franges.

Ce document décrit, à titre préféré, un dispositif interférométrique constitué par un polariscope de SAVART.

En fait, il est apparu avantageux, notamment pour des raisons de flux lumineux reçu, de chercher à utiliser plutôt un interféromètre de type MICHELSON comportant une lame semi-transparente disposée à 45° par rapport à des faisceaux d'entrée et de sortie perpendiculaires entre eux. Le faisceau d'entrée est dissocié par la lame semi-transparente en deux demi-faisceaux que l'on réfléchit et entre lesquels on introduit une différence de marche : après recombinaison par la lame d'une partie de chacun des demi-faisceaux on obtient un faisceau de sortie permettant la constitution d'un interférogramme. En raison de l'apparition de deux demi-faisceaux, on parle aussi d' "interféromètre à deux ondes".

En particulier on a cherché, dans la demande de brevet français 88-17328 publiée comme WO 90/07 698 le 12.07.1990 déposée le 28 Décembre 1988 à améliorer le système spectro-imageur du document EP-A-0 068 922 grâce à la mise au point d'un dispositif interférométrique approprié du type à deux ondes. Elle visait notamment :

- à rendre disponibles deux voies d'entrée et de sortie séparées ;
- à augmenter le gain en énergie utile, à améliorer le contraste des franges et à augmenter la résolution radiométrique ;
- à rester dans un encombrement aussi faible que possible, aussi bien pour le dispositif interférométrique que pour l'ensemble du spectro-imageur, et réduire autant que possible le poids correspondant ;
- à rendre la différence de marche indépendante de l'angle d'ouverture du faisceau incident ;

- à conserver les inclinaisons des rayons moyens des ondes divergentes ; et
- à superposer de manière très précise les images géométriques.

On connaissait déjà un dispositif interférométrique de type MICHELSON (donc à deux ondes) susceptible d'être utilisé dans un spectro-imageur du type décrit dans le document EP-A-0 068 922, à savoir le dispositif décrit par GIRARD dans le brevet US-A-3 684 379.

Pour pallier certaines au moins des limitations inhérentes au dispositif de GIRARD, il a été proposé dans cette demande de brevet 88.17328 un nouveau dispositif interférométrique pour imagerie par spectrométrie par transformée de FOURIER Multiplex, destiné à être mis en défilement relatif par rapport à une image d'une optique d'entrée selon une direction de défilement constituant pour ce dispositif interférométrique une direction de référence, comportant un bloc prismatique en matériau transparent présentant de première et seconde faces d'entrée/sortie perpendiculaires l'une à l'autre et se rejoignant en une arête du bloc, une lame semi-transparente dans ce bloc, disposée à 45° par rapport à ces première et seconde faces d'entrée/sortie et passant par ladite arête du bloc, et de première et seconde surfaces réfléchissantes disposées respectivement en regard de ces première et seconde faces d'entrée/sortie au travers de la lame semi-transparente ; ce nouveau dispositif était caractérisé en ce que :

- à chaque face d'entrée/sortie était associé un plan de référence perpendiculaire à cette face d'entrée/sortie et parallèle à ladite direction de référence,
- au moins une surface inclinée de séparation dioptrique était prévue entre l'une des faces d'entrée/sortie et la surface réfléchissante associée, faisant dans le plan de référence associé un angle de dioptre non nul par rapport à cette face d'entrée/sortie,
- les première et seconde surfaces réfléchissantes étaient de configurations et d'orientations fixes par rapport au bloc et avaient chacune la forme d'un toit dont la concavité était en regard de la face d'entrée/sortie associée et qui admettait un plan bissecteur parallèle à ladite arête du bloc et perpendiculaire à ladite face d'entrée/sortie associée, ces surfaces en toit présentant dans les plans de référence, par rapport aux faces d'entrée/sortie associées, des angles d'inclinaison dont l'écart était non nul.

De la sorte :

1 - l'énergie totale concentrée par l'objectif d'entrée était utilisable ;

2 - les réflexions parasites dues aux dioptres rencontrés par les ondes étaient réémises vers les voies d'entrée et non sur les voies de sortie : elles n'affectaient pas la qualité des franges d'interférences ;

3 - l'image formée par l'objectif d'entrée pouvait être focalisée dans un plan quelconque choisi par l'utilisateur (lequel pouvait ainsi configurer l'interféromètre pour une position quelconque du plan focal).

L'invention vise les mêmes objets que la demande de brevet 88-17328, dans le même domaine d'application, et avec les mêmes avantages mais vise en outre une souplesse d'emploi améliorée, une augmentation du champ d'application et une réduction accrue en masse et en volume.

En effet, malgré le progrès indéniable apporté par cette demande de brevet 88-17328, celle-ci fait intervenir un objectif nécessairement limité en ouverture numérique, qui doit en outre être adapté à la traversée d'une importante épaisseur de verre. En outre, les systèmes de miroir en toit renversent l'image formée par l'objectif ce qui nécessite une rectitude et un alignement rigoureux des arêtes de ces systèmes de miroirs en toit, tout à fait critiques pour le bon fonctionnement de l'interféromètre, mais très difficiles à réaliser.

L'invention parvient à l'objectif visé en renonçant au principe d'un interféromètre perfectionné de type MICHELSON et en préférant partir d'un interféromètre d'un type tout à fait différent (type Mc ZENDER) que l'homme de métier avait pourtant jusque là tendance à considérer comme ayant beaucoup moins de débouchés potentiels que l'interféromètre de MICHELSON, notamment dans celui de spectro-imagerie.

L'invention propose ainsi un dispositif interférométrique à deux voies d'entrée et de sortie pour spectromètrie par transformée de FOURIER Multiplex, comportant deux lames semi-transparentes disposées sensiblement dans le prolongement l'une de l'autre entre deux surfaces réfléchissantes sensiblement parallèles entre elles et à un plan moyen contenant ces lames semi-transparentes, caractérisé en ce que l'une au moins de ces lames et surfaces est inclinée d'une valeur non nulle par rapport à ce plan moyen, la somme algébrique des inclinaisons des lames semi-transparentes par rapport à ce plan moyen étant différente de la somme des inclinaisons des surfaces réfléchissantes par rapport à ce même plan, et en ce qu'au moins une lame prismatique (P) d'indice de réfraction différent du reste du dispositif interférométrique est disposée entre l'une des lames semi-transparentes et l'une des surfaces réfléchissantes, les différences algébriques des angles de lames prismatiques étant différentes de part et d'autre de ce plan moyen.

Selon des dispositions préférées éventuellement combinées :

- les surfaces réfléchissantes sont strictement parallèles ;
- les lames semi-transparentes sont toutes deux inclinées en sens contraire par rapport au plan moyen ;

- il est formé de deux cubes séparateurs présentant des arêtes de coin adjacentes et dont les lames semi-transparentes constituent des plans approximativement diagonaux et de deux prismes entre ces cubes, présentant des coins adjacents approximativement à angle droit, les surfaces réfléchissantes étant ménagées sur des faces de ces prismes opposées à ces coins ;
- le(s)dit(s) angle(s) de lame prismatique est (sont) ménagé(s) entre les faces en regard des cubes et des prismes ;
- le dispositif comporte une seule lame prismatique de préférence située à l'intérieur de l'angle formé par les lames semi-transparentes ;
- ce dispositif interférométrique est en verre tandis que ledit prisme d'indice de réfraction différent est une fente sans matière (de vide ou d'air) ;

L'invention propose également un système de spectro-imagerie comportant ce dispositif interférométrique.

Des objets, caractéristiques et avantages de l'invention ressortent de la description qui suit, donnée à titre d'exemple non limitatif, en regard des dessins annexés sur lesquels :

- la figure 1 est une vue schématique en perspective d'un système de spectro-imagerie par transformée de FOURIER Multiplex comportant un dispositif interférométrique conforme à l'invention ;
- la figure 2 est un schéma en plan d'un autre dispositif interférométrique ; et
- la figure 3 est un schéma de principe d'un tel dispositif interférométrique.

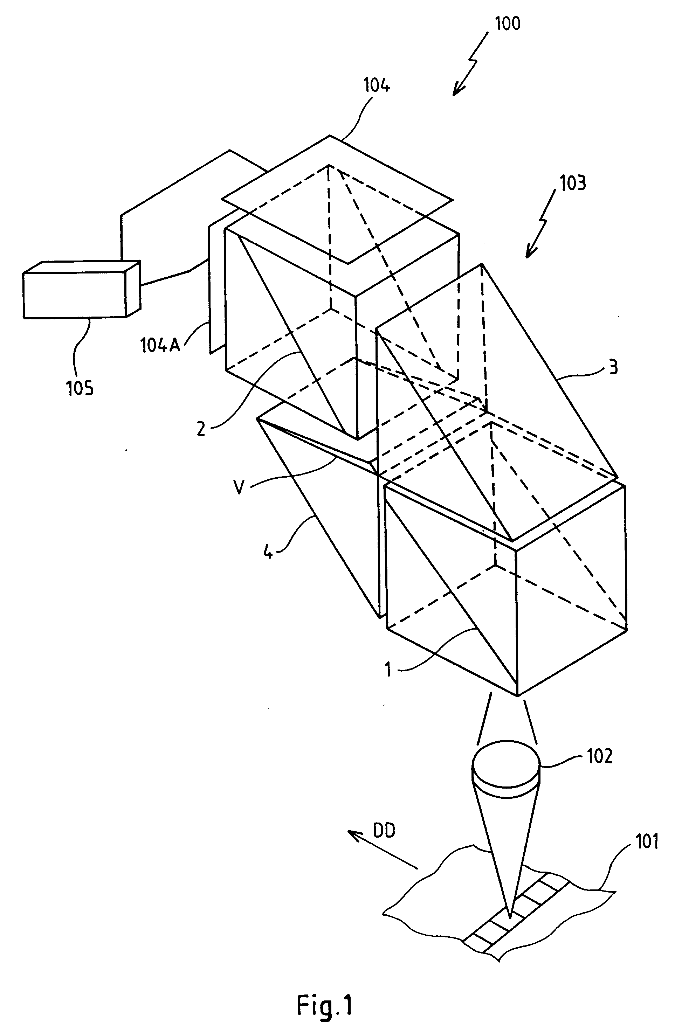

Dans son principe, le système 100 de spectro-imagerie (par transformée de FOURIER Multiplex) de la figure 1 est similaire à celui décrit dans la demande de brevet 88-17328.

Il est adapté à se déplacer parallèlement à une zone de sol 101, selon une direction de défilement ici schématisée par la flèche DD, pour faire une image spectrale de cette zone de sol. Ce système est par exemple embarqué sur un avion ou un satellite (non représenté).

Il comporte une optique d'entrée 102, un dispositif interférométrique 103 à deux voies d'entrée et de sortie (qui sera détaillé ci-dessous), au moins un dispositif de détection 104 (un deuxième dispositif 104A est ici représenté), en pratique constitué d'un réseau ou mosaïque de détecteurs à transfert de champ (en anglais "Charge coupled Device" ou CCD), et enfin une unité de traitement 105 de tout type connu approprié adaptée à former des images spectrales successives du sol, selon un processus connu en soi, en particulier rappelé dans la demande de brevet précitée, à partir des images formées sur le (les) dispositif(s) de détection.

Le dispositif interférométrique 103 à deux voies d'entrée et de sortie, qui constitue le coeur de la présente invention, est dérivé de l'interféromètre de Mc ZENDER c'est-à-dire que, pour l'essentiel, il comporte deux lames semi-transparentes 1 et 2 au moins approximativement coplanaires dans le prolongement l'une de l'autre, disposées entre deux surfaces réfléchissantes planes 3 et 4 au moins approximativement parallèles, entre elles et avec les lames semi-transparentes ; ces surfaces réfléchissantes sont en pratique situées approximativement de façon symétrique de part et d'autre des lames semi-transparentes.

Il est rappelé que dans un interféromètre de Mc ZENDER les lames semi-transparentes et les surfaces réfléchissantes sont rigoureusement parallèles, les lames semi-transparentes étant exactement coplanaires. Ainsi qu'on le verra ci-dessous, l'invention vise précisément à rompre avec ce parallélisme rigoureux.

Dans leur ensemble, ces lames et surfaces 1 à 4 sont approximativement disposées à 45° par rapport à un rayonnement incident de rayon moyen R (ou, en variante, de rayon moyen R', voire et rayons R et R').

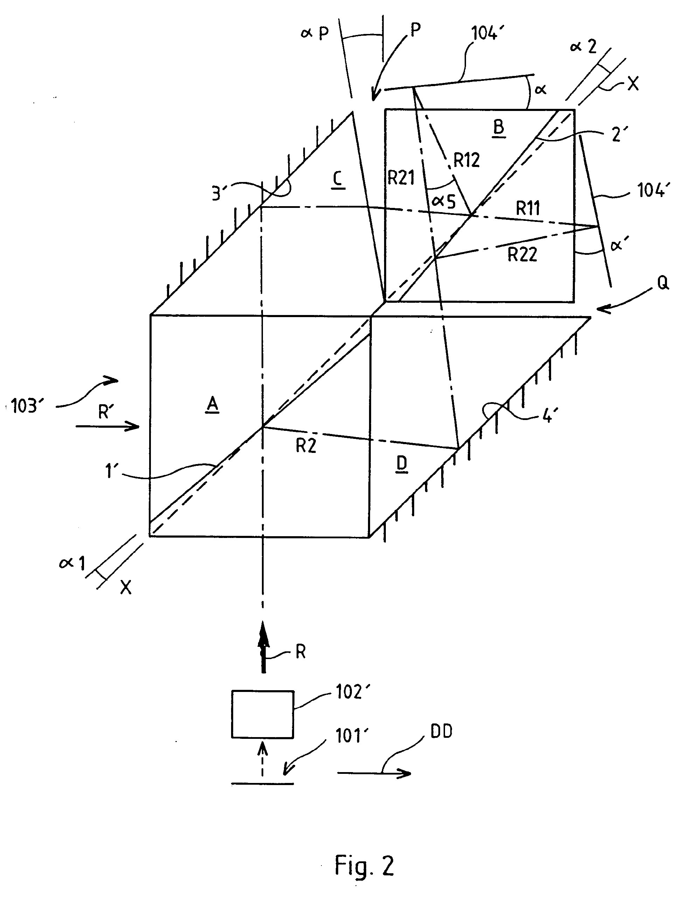

Ainsi qu'il ressort plus clairement de la figure 2 (avec addition d'indices "prime"), le dispositif interférométrique de Mc ZENDER modifié selon l'invention comporte, en outre, au moins une lame prismatique P d'angle $\alpha_p$ et d'indice de réfraction différent du reste du dispositif situé entre l'une des surfaces réfléchissantes (ici 3') et l'une des lames semi-transparentes (ici 2'). Cette lame prismatique P est ici dépourvue de matière.

Plus précisément le dispositif interférométrique 103' est formé de quatre éléments distincts (en pratique en un verre approprié connu), à savoir un cube séparateur d'entrée A dont la lame semi-transparente 1' constitue approximativement un plan diagonal, un cube séparateur de sortie B dont la deuxième lame semi-transparente constitue de même, approximativement, un plan diagonal, et deux prismes de renvoi C et D dont les plus grandes faces longent les surfaces réfléchissantes 3' et 4' (ces dernières sont, par exemple, matérialisées par dépôt d'une couche diélectrique réfléchissante de tout type connu approprié sur ces faces). Ces cubes et prismes peuvent être accolés (c'est ici le cas du cube A avec les prismes C et D, du moment que, comme il a été indiqué précédemment, il subsiste une lame prismatique P (ici entre B et C), d'angle $\alpha_p$, ici constituée par de l'air ou du vide (la fente Q ménagée entre B et D est ici à faces parallèles). Ces éléments sont liés à un support (par exemple derrière le plan de la figure 2) qui les maintient en position. En variante, les éléments A, B, C peuvent être taillés dans un seul bloc.

Les cubes séparateurs A et B peuvent être formés de deux prismes approximativement identiques accolés par leurs bases en étant séparés par la lame semi-transparente considérée matérialisée de toute manière appropriée (couche mince de diélectrique (Al, Ag) puis collage par adhérence moléculaire).

Ainsi que cela est schématisé sur la figure 2, le rayon R est divisé en deux par la première lame semi-transparente 1' (ou lame d'entrée) : un "demi-rayon" $R_1$ traverse la lame 1' et est réfléchi par la surface 3' tandis que l'autre "demi-rayon" $R_2$ est réfléchi par la lame 1' puis par la surface 4'. Chacun de ces demi-rayons est à son tour divisé en deux : le demi-rayon $R_1$ se subdivise en $R_{12}$ réfléchi et $R_{11}$ transmis et le demi-rayon $R_2$ se subdivise en $R_{21}$ transmis et $R_{22}$ réfléchi. De la sorte les rayons $R_{21}$ et $R_{12}$ se recombinent sur le détecteur 104' tandis que les rayons $R_{11}$ et $R_{22}$ se recombinent sur le détecteur 104A' (ces détecteurs sont situés sur les plans focaux des deux voies ainsi constituées).

On appréciera que la différence des inclinaisons $\alpha_1$ et $\alpha_2$ des lames semi-transparentes par rapport à un plan moyen X-X génère une différence de marche entre les deux rayons arrivant sur chacun des systèmes de détecteur, tandis que la lame prismatique P d'angle $\alpha_p$ permet d'établir une compensation d'ouverture numérique. Le choix approprié des angles $\alpha_1$, $\alpha_2$, $\alpha_p$ (et les angles $\alpha$ et $\alpha'$ que font les détecteurs 104 et 104A avec les faces de sortie du cube séparateur de sortie) permettent d'obtenir une superposition des images formées par l'objectif, dans les plans focaux tout en conservant une compensation d'ouverture numérique correcte.

On peut noter à propos des angles $\alpha$ et $\alpha'$ que les angles $\alpha$ et $\alpha'$ correspondent au plan de meilleure mise au point des images formées par l'objectif d'entrée. Leur calcul est aisé. Leur respect n'est toutefois pas critique.

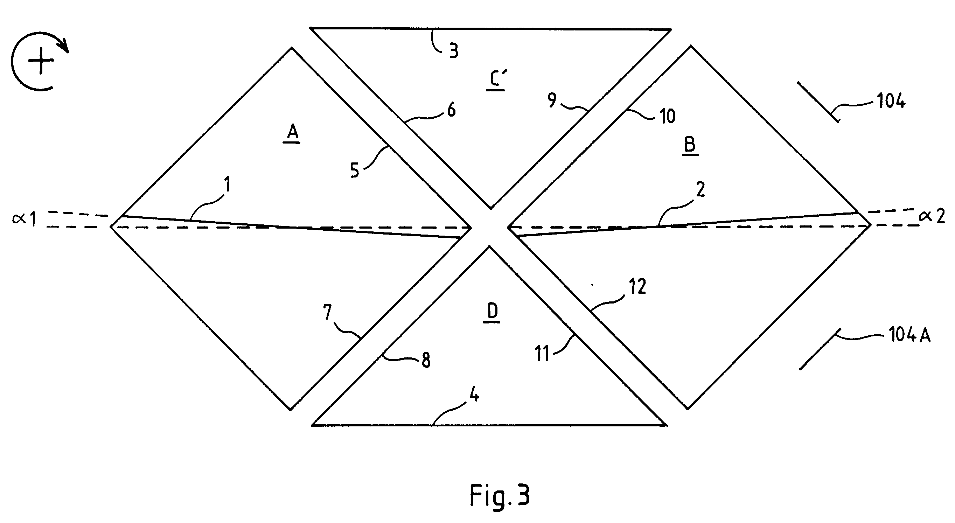

Une présentation plus théorique d'un interféromètre selon l'invention va maintenant être présentée en regard de la figure 3 où, sans utiliser d'indices "prime", on a donné un numéro de référence aux faces des cubes et prismes en regard. Ainsi le cube A et le prisme C sont affrontés par les faces 5 et 6 ; A et D par les faces 7 et 8 ; B et C par les faces 9 et 10 et B et D par les faces 11 et 12. A titre d'exemple, les cubes et prismes A à D sont à angle droit avec addition d'une lame prismatique de verre V pour former la fente ou lame prismatique P. D'autres angles d'inclinaison par rapport au plan moyen, différents de 45°, seraient bien sûr possibles ici.

Sans qu'ils aient été reportés sur la figure 3 pour des raisons de lisibilité on note $\alpha_3$ et $\alpha_4$ les angles d'inclinaison (éventuellement nuls) des surfaces 3 et 4 par rapport au plan X-X ; et $\alpha_5$ à $\alpha_{12}$ sont les angles d'inclinaison des faces 5 à 12 par rapport à une orientation à 45° par rapport à X-X (tous les angles sont bien sûr mesurés avec la même convention ; par exemple le sens des aiguilles d'une montre.

De même on définit la grandeur Ti, comme étant le trajet parcouru par le rayon moyen, entre la face i (lame ou surface) et les plans focaux (c'est en fait la somme des trajets dans chacun des matériaux entre cette face et les plans focaux, le trajet dans chacun des matériaux étant divisé par l'indice de réfraction du matériau : si n est l'indice de verre utilisé, le tirage global est donc la somme : $\dfrac{Ti(verre)}{n}$ + Ti(air)

Les performances optimales sont atteintes si l'on satisfait aux trois exigences suivantes :

1° - La création d'une différence de marche : si en sortie de l'interféromètre, les rayons moyens des faisceaux des deux voies forment un angle $\alpha$ entre eux, alors cet angle assure la variation de la différence de marche entre les deux voies de l'interféromètre le long de la droite formée par l'intersection du plan focal et du plan comprenant les deux rayons moyens.

2° - La compensation d'ouverture numérique : la compensation d'ouverture numérique, ou indépendance de la différence de marche vis à vis de l'angle d'incidence du rayon du faisceau considéré, est assurée lorsque les images formées par les deux voies de l'interféromètre sont au point dans le même plan focal.

3° - La superposition des images : la superposition des images est assurée lorsque les rayons moyens des faisceaux des deux voies correspondant au même point image s'interceptent dans le plan focal.

La première exigence se traduit par la relation, en appelant $\alpha_s$ l'angle avec lequel deux rayons se recombinent sur les plans focaux (voir figure 2) :

$$\alpha_s = 2n.(\alpha_1 + \alpha_2 - \alpha_3 - \alpha_4) - (n-1).(\alpha_5 - \alpha_6 + \alpha_7 - \alpha_8 + \alpha_{10} - \alpha_9 + \alpha_{12} - \alpha_{11})$$

La relation de bonne compensation d'ouverture numérique s'écrit :

$$\alpha_1 + \alpha_2 - \alpha_3 - \alpha_4 + (\alpha_5 - \alpha_6 + \alpha_7 - \alpha_8 + \alpha_{10} - \alpha_9 + \alpha_{12} - \alpha_{11})/2.(n-1) = 0$$

On observe que l'on retrouve, d'une part, les écarts angulaires par rapport à X-X des lames et surfaces 1 à 4 et, d'autre part, les écarts d'angle (d'air (ou de vide) formés à la liaison des cubes et prismes A à D dont on a vu que l'un au moins doit être non nul pour former la lame prismatique P.

Le premier terme correspond à la différence des inclinaisons cumulées des lames semi-transparentes, et de celles cumulées des surfaces réfléchissantes. Ce terme est non nul.

Le second terme correspond à la différence des angles cumulés des lames prismatiques situées entre A et C, et B et D et des angles cumulés des lames prismatiques situées entre A et D et B et C. Il s'agit également de la différence entre les différences des angles de lame prismatique existant respectivement d'un côté ou de l'autre du plan moyen X-X.

Ces relations font jouer des rôles symétriques aux deux cubes ainsi qu'aux deux prismes.

Les rayons moyens des deux voies correspondant à un même point image s'interceptent dans les plans focaux si :

$$\alpha_1.T_1 + \alpha_2.T_2 - \alpha_3.T_3 - \alpha_4.T_4 = [(n-1)/2n].$$
$$(\alpha_5.T_5 - \alpha_6.T_6 + \alpha_7.T_7 - \alpha_8.T_8 + \alpha_{10}.T_{10} - \alpha_9.T_9 + \alpha_{12}.T_{12} - \alpha_{11}.T_{11})$$

A titre d'exemple (voir aussi la fig.2) pour obtenir $\alpha_s = 4.10^{-3}$ rad tous les angles sont nuls sauf :

$$\alpha_1 = 0,72.10^{-3} \text{ rad}$$
$$\alpha_2 = 1,54.10^{-3} \text{ rad}$$
$$\alpha_9 = 3,54.10^{-3} \text{ rad}$$

A titre d'exemple de dimensionnement, la largeur du cube A vaut 14 mm, celle du cube B vaut 12 mm avec une épaisseur de 20 mm.

On a supposé ici que les faces libres des cubes A et B étaient rigoureusement à 45° par rapport à X-X.

Les angles $\alpha$ et $\alpha'$ sont sensiblement égaux à $10^{-3}$ rad.

L'interféromètre Mc ZENDER ainsi modifié conserve les propriétés de l'interféromètre proposé dans le brevet 88-17328, tout en améliorant ses performances ; son utilisation présente les avantages suivants :

- Plus grande souplesse d'emploi : dans le cas de l'utilisation de l'interféromètre proposé dans le brevet 88-17328, les systèmes de miroirs en toit déplacent l'image formée par l'objectif, symétriquement par rapport à l'axe de l'arête des miroirs en toit, la superposition des images nécessite donc un alignement rigoureux des arêtes des systèmes de miroirs en toit, difficile à réaliser, très critique dans le fonctionnement de l'interféromètre. L'interféromètre type Mc ZENDER modifié, n'effectue pas de renversement d'image, la superposition des images est contrôlée par de simples mesures d'autocollimation sur les différents dioptres et miroirs de l'interféromètre.

- Augmentation du champ d'application : les trajets des rayons, dans l'interféromètre type Mc ZENDER modifié sont diminués par rapport au cas de l'interféromètre proposé dans le brevet n° 88-17328. De ce fait, la courbe donnant l'ouverture numérique admissible de l'objectif en fonction de la largeur du cube séparateur d'entrée est nettement plus favorable.

Dans le cas d'une application donnée, l'interféromètre peut fonctionner associé avec des objectifs de plus faibles ouvertures numériques que dans le cas de l'utilisation de l'interféromètre proposé dans le brevet n° 88-17328.

- Diminution de la masse et du volume : à performances égales l'interféromètre type Mc ZENDER modifié à une masse et un volume réduit d'un facteur 2 à 3 par rapport à l'interféromètre proposé dans le brevet n° 88-17328.

## Revendications

1. Dispositif interférométrique à deux voies pour spectrométrie par transformée de FOURIER Multiplex, comportant deux lames semi-transparentes (1, 2 ; 1', 2') disposées sensiblement dans le prolongement l'une de l'autre entre deux surfaces réfléchissantes (3, 4 ; 3', 4') sensiblement parallèles entre elles et à un plan moyen (X-X) contenant ces lames semi-transparentes, caractérisé en ce que l'une au moins de ces lames et surfaces est inclinée d'une valeur non nulle par rapport à ce plan moyen, la somme algébrique des inclinaisons ($\alpha_1$, $\alpha_2$) des lames semi-transparentes par rapport à ce plan moyen étant différente de la somme des inclinaisons des surfaces réfléchissantes par rapport à ce même plan, et en ce qu'au moins une lame prismatique (P) d'indice de réfraction différent du reste du dispositif interférométrique est disposée entre l'une des lames semi-transparentes et l'une des surfaces réfléchissantes, les différences algébriques des angles de lame prismatique étant différentes de part et d'autre de ce plan moyen.

2. Dispositif selon la revendication 1, caractérisé en ce que les surfaces réfléchissantes (3, 4 ; 3', 4') sont strictement parallèles.

3. Dispositif selon la revendication 1 ou la revendication 2, caractérisé en ce que les lames semi-transparentes (1, 2 ; 1', 2') sont toutes deux inclinées en sens contraire par rapport au plan moyen.

4. Dispositif selon l'une quelconque des revendications 1 à 3, caractérisé en ce qu'il est formé de deux cubes séparateurs (A, B) présentant des arêtes de coin adjacentes et dont les lames semi-transparentes constituent des plans approximativement diagonaux et de deux prismes (C, D) entre ces cubes, présentant des coins adjacents approximativement à angle droit, les surfaces réfléchissantes étant ménagées sur des faces de ces prismes opposées à ces coins.

5. Dispositif selon la revendication 4, caractérisé en ce que lesdits angles prismatiques sont ménagés entre les faces en regard (5-12) des cubes et des prismes.

6. Dispositif selon l'une quelconque des revendications 1 à 5, caractérisé en ce qu'il comporte une seule lame prismatique.

7. Dispositif selon la revendication 6, caractérisé en ce que cette lame prismatique (P) est située à l'intérieur de l'angle formé par les lames semi-transparentes.

8. Dispositif selon l'une quelconque des revendications 1 à 7, caractérisé en ce que ce dispositif interférométrique est en verre tandis que ladite lame prismatique (P) d'indice de réfraction différent est une fente de vide ou d'air.

9. Système de spectro-imagerie par transformée de FOURIER Multiplex destiné à être déplacé selon une direction (DD) de défilement par rapport à une zone de sol (101), comportant une optique d'entrée (102), un dispositif interférométrique selon l'une quelconque des revendications 1 à 8 dont l'une des lames semi-réfléchissantes (1, 1') est à 45° du rayonnement transmis par cette optique d'entrée, au moins un dispositif de détection (104, 104A) approximativement disposé à 45° par rapport à l'autre des lames semi-transparentes, et un dispositif de traitement (105) connecté à ce dispositif de détection.

## Patentansprüche

1. Zweiwege-Interferometervorrichtung für die Fourier-Transformation-Multiplex-Spektrometrie, umfassend zwei halbtransparente Lamellen (1, 2; 1', 2'), die im wesentlichen in der gegenseitigen Verlängerung zwischen zwei reflektierenden Flächen (3, 4; 3', 4') angeordnet sind, die im wesentlichen zueinander und zu einer diese halbtransparenten Lamellen enthaltenden Mittelebene (X-X) parallel sind, dadurch gekennzeichnet, daß wenigstens eine dieser Lamellen und Flächen um einen Wert von nicht Null gegen diese Mittelebene geneigt ist, wobei die algebraische Summe der Neigungen ($\alpha_1$, $\alpha_2$) der halbtransparenten Lamellen bezüglich dieser Mittelebene von der Summe der Neigungen der reflektierenden Flächen bezüglich dieser selben Ebene verschieden ist und daß wenigstens eine prismenförmige Lamelle (P) mit einer von der übrigen Interferometervorrichtung abweichenden Brechzahl zwischen einer der halbtransparenten Lamellen und einer der reflektierenden Flächen angeordnet ist, wobei die algebraischen Differenzen der Winkel von prismenförmigen Lamellen zu beiden Seiten dieser Mittelebene verschieden sind.

2. Vorrichtung nach Anspruch 1, dadurch gekennzeichnet, daß die reflektierenden Flächen (3, 4; 3', 4') strikte parallel sind.

3. Vorrichtung nach Anspruch 1 oder 2, dadurch gekennzeichnet, daß die halbtransparenten Lamellen (1, 2; 1', 2') alle beide in entgegengesetzter Richtung bezüglich der Mittelebene geneigt sind.

4. Vorrichtung nach einem der Ansprüche 1 bis 3, dadurch gekennzeichnet, daß sie von zwei Trennwürfeln (A, B), die aneinander angrenzende Keilwinkel besitzen und deren halbtransparente Lamellen annähernd diagonale Ebenen bilden, und von zwei Prismen (C, D) zwischen diesen Würfeln gebildet ist, die annähernd rechtwinklige, aneinander angrenzende Keile besitzen, wobei die reflektierenden Flächen auf diesen Keilen entgegengesetzen Seiten dieser Prismen vorgesehen sind.

5. Vorrichtung nach Anspruch 4, dadurch gekennzeichnet, daß diese Prismenwinkel zwischen den einander gegenüberstehenden Seiten (5-12) der Würfel und der Prismen vorgesehen sind.

6. Vorrichtung nach einem der Ansprüche 1 bis 5, dadurch gekennzeichnet, daß sie eine einzige prismenförmige Lamelle besitzt.

7. Vorrichtung nach Anspruch 6, dadurch gekennzeichnet, daß diese prismenförmige Lamelle (P) im Inneren des von den halbtransparenten Lamellen gebildeten Winkels gelegen ist.

8. Vorrichtung nach einem der Ansprüche 1 bis 7, dadurch gekennzeichnet, daß diese Interferometervorrichtung aus Glas besteht, während diese prismenförmige Lamelle (P) mit abweichender Brechzahl ein Vakuum- oder Luftspalt ist.

9. Fourier-Transformation-Multiplex-Spektralbild darstellungssystem, das dazu bestimmt ist, in einer Vorbewegungsrichtung (DD) bezüglich einer Bodenzone (101) bewegt zu werden, umfasssend eine Eingangsoptik (102), eine Interferometervorrichtung nach einem der Ansprüche 1 bis 8, von der eine der halbreflektierenden Lamellen (1, 1') sich in 45° zu der von dieser Eingangsoptik übertragenen Strahlung befindet, wenigstens eine Erfassungsvorrichtung (104, 104A), die annähernd in 45° zu der anderen der halbtransparenten Lamellen angeordnet ist, und eine mit dieser Erfassungsvorrichtung verbundene Verarbeitungsvorrichtung (105).

**Claims**

1. Two-channel multiplex Fourier transform spectrometry interferometer device comprising two semi-reflecting mirrors (1, 2; 1', 2') substantially in alignment with each other between two reflecting surfaces (3, 4; 3', 4') substantially parallel to each other and to a mean plane (X-X) containing said semi-reflecting mirrors, characterized in that at least one of said mirrors and surfaces is inclined by a non-zero amount to said mean plane, the algebraic sum of the inclinations ($\alpha_1$, $\alpha_2$) of the semi-reflecting mirrors relative to said mean plane being different than the sum of the inclinations of the reflective surfaces relative to said plane, and in that at least one prismatic blade means (P) with an index of refraction different than that of the remainder of the interferometer device is disposed between one of said semi-reflecting mirrors and one of said reflective surfaces, the algebraic differences of the prismatic blade angles being different to either side of said mean plane.

2. Device according to claim 1 characterized in that said reflective surfaces (3, 4; 3', 4') are strictly parallel.

3. Device according to claim 1 or claim 2 characterized in that said semi-reflecting mirrors (1, 2; 1', 2') are both inclined in opposite directions relative to said mean plane.

4. Device according to any one of claims 1 to 3 characterized in that it is formed of two separator cubes (A, B) having adjacent corner edges and the semi-reflecting mirrors of which constitute two approximately diagonal planes and of two prisms (C, D) between said cubes having approximately right-angle adjacent corners, said reflective surfaces being formed on faces of said prisms opposite said corners.

5. Device according to claim 4 characterized in that said prismatic blade means is/are formed between the facing faces (5-12) of said cubes and said prisms.

6. Device according to any one of claims 1 to 5 characterized in that it comprises a single prismatic blade means.

7. Device according to claim 6 characterized in that said prismatic blade means (P) is inside the angle formed by said semi-reflecting mirrors.

8. Device according to any one of claims 1 to 7 characterized in that said interferometer device is made from glass and said different refractive index prismatic blade means (P) is an air gap or an evacuated zone.

9. Multiplex Fourier transform spectro-imaging system adapted to be moved relative to a ground area (101) in a scanning direction (DD) and comprising an entry optical system (102), a two-channel multiplex Fourier transform spectrometry interferometer device according to any one of claims 1 to 8 with one of the semi-reflecting mirrors (1, 1') at 45° to the radiation transmitted by said entry optical system, at least one sensing device (104, 104A) at approximately 45° to the other semi-reflecting mirror and a processing device (105) connected to said sensing device.

Fig.1

Fig. 2

Fig. 3